# EUROPEAN PATENT APPLICATION

(11) **EP 1 633 161 A1**
(43) Date of publication of application: **08.03.2006**
(21) Application number: 04745709.8
(22) Date of filing: 09.06.2004
(51) Int. Cl.: H04Q 7/38, H04L 12/56

(54) **MEDIUM SIGNAL RECEPTION DEVICE, TRANSMISSION DEVICE, AND TRANSMISSION/RECEPTION SYSTEM**

(30) Priority: 11.06.2003 JP 2003166710
(71) Applicant: NEC CORPORATION, Minato-ku, Tokyo 108-8001 (JP)
(72) Inventor: OZAWA, Kazunori, c/o NEC Corporation, Tokyo 1088001 (JP)
(74) Representative: von Samson-Himmelstjerna, Friedrich
(86) International application number: PCT/JP2004/008034
(87) International publication number: WO 2004/112420

(57) **Abstract**

A transmission/reception system for transmitting a media signal such as moving picture data, audio data and the like has a transmitter for transmitting the media signal to a transmission path, and a receiver for receiving the media signal through the transmission path. The receiver comprises a buffer for temporarily storing the media signal from the transmitter, a monitoring unit for monitoring the amount of accumulation in the buffer, and a control unit for sending a control signal to the transmission path when the amount of accumulation exceeds a predefined threshold or falls short of the threshold. The transmitter comprises an accumulation unit for storing at least two types of media signals at different bit rates, and a delivery unit for receiving the control signal sent from the receiver to the transmission path, switching the bit rate based on the control signal, and delivering the media signal from the accumulation unit.

## Description

### TECHNICAL FIELD:

The present invention relates to data transmission/reception techniques, and more particularly, to a receiver, transmitter, and transmission/reception system which are suitably applied to the delivery of encoded video/audio data through a radio transmission path.

### BACKGROUND ART:

In recent years, a method of transmitting data encoded through highly efficient compression has been widely used as a method of efficiently transmitting moving picture data. There are a number of methods for delivering moving picture compression encoded information to an lP (Internet Protocol) network which utilizes a packet exchange scheme. A variety of attempts have been made for the delivery of moving pictures using a radio transmission path. In the following description, moving picture and audio data are also called "media signals."

When moving picture data and audio data are delivered using a radio transmission path, if a radio error or loss occurs on the radio transmission path, a method of requesting a retransmission of lost data is common. Also, in communications on a radio transmission path, transmission/reception power control and the like are conducted based on radio reception environments of individual recipients to ensure the communication quality of data and stabilize received data.

In communications on a radio transmission path, a radio communications system has been known to measure the amounts of data accumulated in respective buffers of a base station and a mobile station, and increase/decrease the quantity of radio channels such that each of the accumulated data amounts stays between a first and a second threshold, thereby efficiently transmitting/receiving data. Such a radio system is disclosed in Japanese Patent Laid-open Application No. 2001-359153 (JP, P2001-359153A).

An AV transmission/reception system has also been known to monitor the amount of data accumulated in a reception buffer, for managing the reception buffer, and set the frequency of a reception clock higher when the amount of accumulated data increases beyond an upper threshold, while set the frequency of the reception clock lower when the amount of accumulated data falls short of a lower threshold. Such an AV transmission/reception system is disclosed in Japanese Patent Laid-open Application No. 2002-165148 (JP, P2002-165148A).

Japanese Patent Laid-open Application No. 7-79252 (JP, 7-79252, A) discloses a packet exchange apparatus of a packet output type, which, when the amount of accumulated packets exceeds a predefined threshold in a buffer memory, continuously sends information, which notifies the detection of the buffer memory in which the threshold is exceeded, until the amount of accumulation decreases to the threshold or less.

Incidentally, when a moving picture is delivered to a receiver, which is a mobile station, through a radio transmission path, if the receiver (mobile station) moves beyond a certain radio area or radio cell into an adjacent radio area, a need arises for switching a base station to which the receiver connects, resulting in a handover. During a handover period, the reception of data stops in the receiver, so that a large amount of data drops. When the reception stops, newly received data is not accumulated in a buffer of the receiver, whereas data previously stored in the buffer are sequentially retrieved for decoding and the like. As a result, the amount of data stored in the buffer reduces to zero, i.e., the buffer is "exhausted," resulting in problems, associated with moving pictures, that the screen stops, the screen freezes, and the like, and in problems, associated with audio signals, that sound is interrupted, voices are muted, and the like.

Such stop of the screen in the moving picture and interruption of sound in the voice are problems which occur not only during a handover. In a best-effort network, similar problems also occur when an available bandwidth varies over time.

Further, when data which has dropped on the receiving side is simply re-transmitted from the transmission side to the reception side, network resources will become short for simultaneously receiving original data to be received and re-transmitted data at the receiver.

### DISCLOSURE OF THE INVENTION:

It is an object of the present invention to provide a method which is capable of minimizing a degradation in reception quality even when a handover occurs to a receiver during the delivery of data such as a moving picture, audio and the like.

It is another object of the present invention to provide an apparatus which is capable of minimizing a degradation in reception quality even when a handover occurs to a receiver during the delivery of data such as a moving picture, audio and the like.

It is a further object of the present invention to provide a method and apparatus which are capable of minimizing a degradation in reception quality caused by a handover and the like, and are capable of keeping the amount of processing small both in the transmission side and reception side.

According to the present invention which achieves the foregoing objects, a receiver has monitoring means for monitoring the amount of accumulation in a buffer for storing a media signal on a reception side, and control means for sending a control signal to a transmission path when the amount of accumulation exceeds or falls short of a predefined threshold. The receiver according to the present invention comprises a decoder for retrieving data from the buffer and decoding the data, and is controlled such that data is received before data in the buffer is exhausted, thereby maintaining the quality of a decoded media data.

Alternatively, a receiver according to the present invention may be configured to have monitoring means for monitoring a receiving situation, and control means for sending a control signal to a transmission path when the receiving situation changes to a predefined situation. As the predefined situation, a radio handover is illustrated.

A transmitter according to the present invention has an accumulation unit for storing at least two types of media signals at different bit rates, and a switching unit for receiving a control signal from a transmission path, and retrieving the media signal from the accumulation unit with switching the bit rate of the media signal based on the control signal.

Alternatively, a transmitter may comprise an accumulation unit for storing at least two or more types of files in which at least two types of media signals at different bit rates are stored, and a delivery unit for receiving a control signal from a transmission path, switching a file to be delivered based on the control signal, and retrieving the file from the accumulation unit.

Alternatively, a transmitter may be configured to have an accumulation unit in which a media signal is stored, and a converter unit for receiving a control signal from a transmission path, converting the bit rate of the media signal based on the control signal, and retrieving the media signal from the accumulation unit.

Alternatively, a transmitter may be configured to read and deliver a media signal stored in an accumulation unit based on a control signal received from a transmission path at time intervals different from time intervals at which the media signal was encoded.

A transmission/reception system according to the present invention has the aforementioned receiver and the aforementioned transmitter, such that the media signal is sent from the transmitter to the receiver through the transmission path, while the control signal is sent from the receiver to the transmitter.

For example, in the transmission/reception system according to the present invention, the receiver has monitoring means for monitoring the amount of accumulation in a buffer for storing a media signal, and control means for sending a control signal to a transmission path when the amount of accumulation exceeds a predefined threshold or falls short of the threshold, while the transmitter has an accumulation unit for storing at least two types of media signals at different bit rates, and means for receiving the control signal from the transmission path, and switching the bit rate based on the control signal to retrieve the media signal from the accumulating unit. ln this configuration, the accumulating means may accumulate at least two or more types of files in which at least two types of media signals at different bit rates are stored, and the retrieving means may receive a control signal from the transmission path, switch a file based on the control signal, and retrieve the file from the accumulating means. Alternatively, the transmitter may comprise accumulating means in which a media signal is stored, and converting means for receiving a control signal from a transmission path, converting the bit rate based on the control signal, and retrieving the media signal from the accumulating means. Alternatively, the transmitter may comprise accumulating means in which a media signal is accumulated, and delivering means for receiving a control signal from the transmission path, and reading and delivering the media signal from the accumulating means based on the control signal at time intervals different from time intervals at which the media signal was encoded.

In another transmission/reception system of the present invention, a receiver comprises monitoring means for monitoring a receiving situation, and control means for sending a control signal to a transmission path when the receiving situation changes to a predefined situation, while a transmitter comprises accumulating means for accumulating at least two types of files in which at least two types of media signals at different bit rates are stored, and means for receiving the control signal from the transmission path, switching a file based on the control signal, and retrieving the file from the accumulating means. Alternatively, the transmitter has accumulating means in which a media signal is stored, and converting means for receiving the control signal from the transmission path, converting the bit rate based on the control signal, and retrieving the media signal from the accumulating means. Alternatively, the transmitter may comprise accumulating means in which a media signal is accumulated, and delivering means for receiving the control signal from the transmission path, and reading and delivering the media signal from the accumulating means based on the control signal at time intervals different from time intervals at which the media signal was encoded.

According to the present invention, when encoded data of moving picture and voice is delivered through a radio transmission path, it is possible to minimize a degradation in the reception quality, for example, disturbance in the video quality and sound quality, due to variations in radio network band, and a handover of a picture and/or audio data receiver between base stations. ln addition, an additional amount of processing for accomplishing such advantages can be kept small both on the transmission and reception sides.

### BRIEF DESCRIPTION OF THE DRAWINGS:

Fig. 1 is a block diagram illustrating the configuration of a picture data delivery system according to the present invention.
Fig. 2 is a block diagram illustrating the configuration of a first example of a data receiver.
Fig. 3 is a block diagram illustrating the configuration of a second example of the data receiver.
Fig. 4 is a block diagram illustrating the configuration of a third example of the data receiver.
Fig. 5 is a block diagram illustrating the configuration of a first example of a picture data transmitter.
Fig. 6 is a block diagram illustrating the configuration of a second example of the picture data transmitter.
Fig. 7 is a block diagram illustrating the configuration of a third example of the picture data transmitter.
Fig. 8 is a block diagram illustrating the configuration of a first example of the picture data delivery system.
Fig. 9 is a block diagram illustrating the configuration of a second example of the picture data delivery system.
Fig. 10 is a block diagram illustrating the configuration of a third example of the picture data delivery system.
Fig. 11 is a block diagram illustrating the configuration of a fourth example of the picture data delivery system.
Fig. 12 is a block diagram illustrating the configuration of a fifth example of the picture data delivery system.
Fig. 13 is a block diagram illustrating the configuration of a sixth example of the picture data delivery system.
Fig. 14 is a block diagram illustrating the configuration of a seventh example of the picture data delivery system.

### BEST MODE FOR CARRYING OUT THE INVENTION:

In the following, a preferred embodiment of the present invention will be described in connection with the transmission and reception of video encoded data, however, it goes without saying that the present invention can be applied to real-time media signals such as speech encoded data, audio encoded data and the like using similar configurations to those described below.

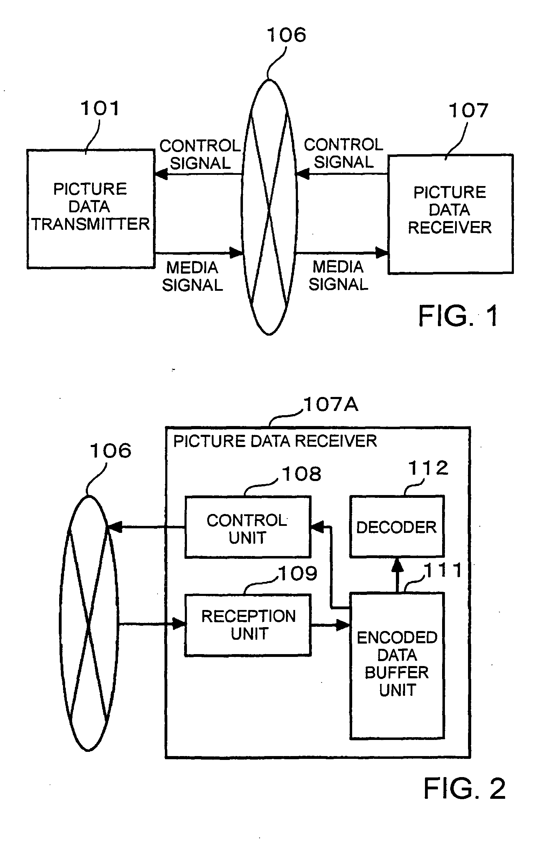

A picture data delivery system according to a preferred embodiment of the present invention illustrated in Fig. 1 delivers a picture data signal and/or a speech data signal, as a media signal, from a data transmitter to a data receiver through transmission path 106. Assume herein that the media signal includes a picture data signal, the data transmitter is picture data transmitter 101, and the data receiver is picture data receiver 107.

In transmission path 106, which is configured as a radio network, an IP (Internet Protocol) network is arranged on a radio physical layer, where data is assumed to be transmitted using UDP (User Datagram Protocol)/IP as a protocol. ln other words, transmission path 106 is a radio lP network. Picture data transmitter 101, which is a server connected to the radio lP network, transmits picture encoded data using UDP/lP as a transmission protocol. Picture data receiver 107, which is a client terminal connected to the radio IP network, receives picture encoded data using UDP/IP. Further, this delivery system is configured such that a control signal is transmitted from picture data receiver 107 to picture data transmitter 101 through transmission path 106, where picture data transmitter 101 switches the bit rate in accordance with the control signal to transmit picture encoded data, as will be later described.

First, a description will be given of picture data receiver 107.

Fig. 2 illustrates a first example of the picture data receiver. picture data receiver 107A illustrated in Fig. 2 comprises reception unit 109, control unit 108, encoded data buffer unit 111, and decoder 112.

Reception unit 109 receives picture encoded data from transmission path 106, and accumulates it in encoded data buffer unit 111. Encoded data buffer unit 111, which temporarily stores received picture encoded data, absorbs packet variations on transmission path 106, and late arrival of packets, and then supplies the received packets to decoder 112.

Control unit 108 measures the amount of buffer accumulation for encoded data buffer unit 111 at predefined time intervals. Here, the amount of buffer accumulation represents the amount of data which currently stays in the buffer. Control unit 108 sends a control signal to transmission path 106 when the buffer in the encoded data buffer unit 111 is about to be exhausted. Specifically, when the amount of buffer accumulation falls short of a predefined threshold or exceeds this threshold, control unit 108 sends the control signal to a delivering side of contents data through transmission path 106. The delivering side is generally a picture data transmitter. The case where the amount of buffer accumulation falls short of the threshold corresponds to the case where the amount of data staying in the buffer is so reduced that the buffer is close to an exhausted state. Here, used as a format for the control signal can be RTCP (Real-time Transport Control Protocol) standardized by IETF (Internet Engineering Task Force) as RFC (Request for Comments), an extended version of RTCP which is currently being planned for standardization in IETF, RTSP (Real-time Streaming Protocol) standardized as RFC in IETF, and the like. ln regard to which is used for the control signal, the foregoing applies to the following respective examples.

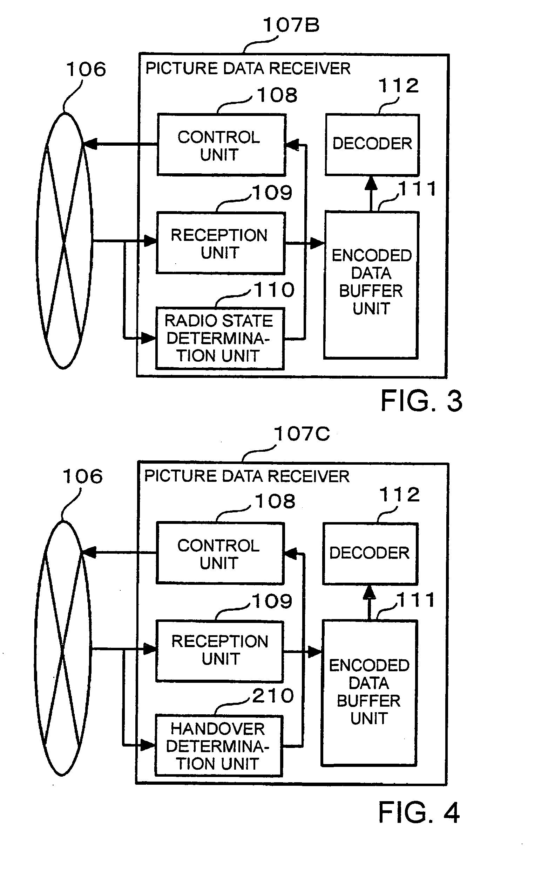

Fig. 3 illustrates a second example of the picture data receiver. In Fig. 3, components identical to those in Fig. 2 are designated the same reference numerals, and repeated descriptions will not be made below.

Picture data receiver 107B illustrated in Fig. 3 comprises radio state determination unit 110 in addition to picture data receiver 107A illustrated in Fig. 2. Radio state determination unit 110 is connected to transmission path 106 together with reception unit 9, and has its output connected to control unit 108. Radio state determination unit 110 monitors a radio receiving state on transmission path 106 in picture data receiver 107B, and, when a receiving situation changes to a predefined situation, notifies control unit 108 to that effect. Upon receipt of the notification from radio state determination unit 110, control unit 108 sends a control signal to transmission path 106.

Fig. 4 illustrates a third example of the picture data receiver. In Fig. 4, components identical to those in Fig. 2 are designated the same reference numerals, and repeated descriptions will not be made below.

Picture data receiver 107C illustrated in Fig. 4 comprises handover determination unit 210 in addition to picture data receiver 107A illustrated in Fig. 2. Handover determination unit 210 monitors a radio state on transmission path 106, and communicates to control unit 108, based on the radio state, when a radio reception area (or a cell), to which receiver 107C should belong, changes from a current radio reception area to an adjacent area, i.e., when a handover takes place, to that effect. Upon receipt of the notification of a handover, control unit 108 sends a control signal to transmission path 106. This picture data receiver 107C corresponds to a receiver in which when a radio reception state determined by radio state determination unit 110 is a handover in picture data receiver 107B illustrated in Fig. 3.

Next, a description will be given of picture data transmitter 101.

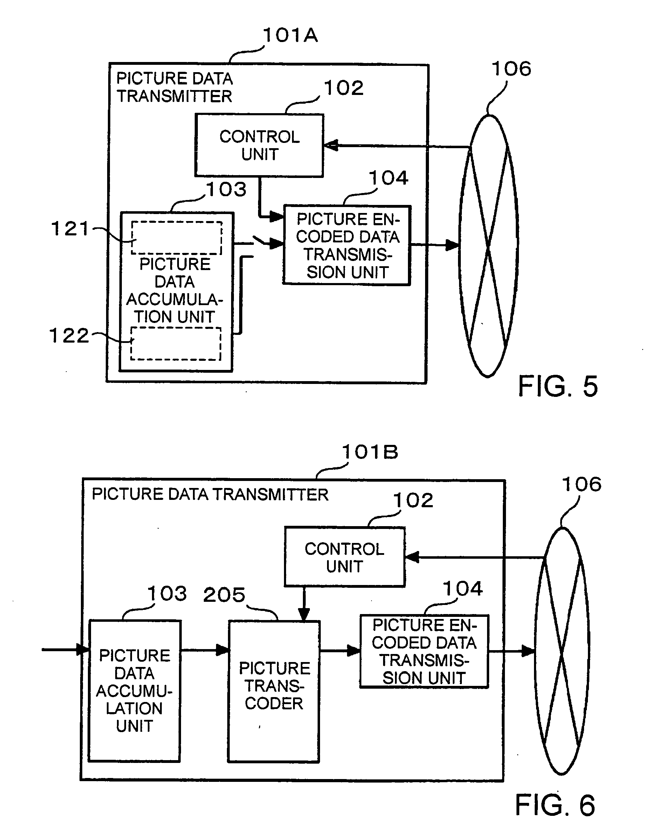

Fig. 5 illustrates a first example of the picture data transmitter. picture data transmitter 101A illustrated in Fig. 5 comprises picture data accumulation unit 103, picture encoded data transmission unit 104, and control unit 102.

Picture data accumulation unit 103 accumulates at least two types of picture data signals at different bit rates (for example, B1 and B2). Corresponding to the respective picture data signals at different bit rates, Picture data accumulation unit 103 comprises accumulation areas 121, 122. Assume herein that picture data is either (1) previously accumulated picture data, or (2) picture data generated by encoding in real time.

Control unit 102 receives a control signal, transmitted from the picture data receiver to transmission path 106, from transmission path 106, and generates a signal for switching the bit rate of picture data based on the control signal, i.e., a bit rate switching signal.

Picture encoded data transmission unit 104 switches the bit rate of picture data in accordance with the bit rate switching signal supplied from control unit 102, and then encodes the picture data for delivery to transmission line 106.

In picture data transmitter 101A illustrated in Fig. 5, picture encoded data at different bit rates (B1 and B2) may be stored in picture data accumulation unit 103 as files, respectively, such that picture encoded data transmission unit 104 may be configured to switch the files in accordance with the control signal from transmission path 106 to deliver the resulting file to transmission path 106. In this case, picture data accumulation unit 103 need not define explicitly distinguished accumulation areas for each of bit rates.

Fig. 6 illustrates a second example of the picture data transmitter. ln Fig. 6, components identical to those in Fig. 5 are designated the same reference numerals, and repeated descriptions will not be made below.

Picture data transmitter 101 B illustrated in Fig. 6 is configured to comprise picture transcoder 205 in picture data transmitter 101A illustrated in Fig. 5. Picture transcoder 205 receives picture encoded data, receives a control signal from control unit 102, converts the bit rate of the received picture encoded data in real time or in non-real time in accordance with the control signal, and supplies the resulting data to picture encoded data transmission unit 104. Picture encoded data transmission unit 104 sends the picture data after the bit rate conversion to transmission path 106.

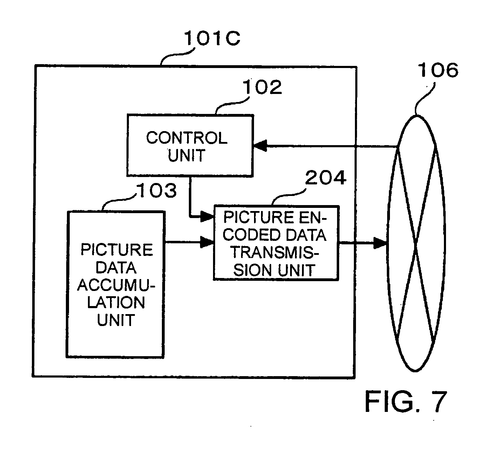

Fig. 7 illustrates a third example of the picture data transmitter. In Fig. 7, components identical to those in Fig. 5 are designated the same reference numerals, and repeated descriptions will not be made below.

While picture data transmitter 101C illustrated in Fig. 7 is similar to picture data transmitter 101A illustrated in Fig. 5, they differ in a function of the picture encoded data transmission unit. In picture data transmitter 101C illustrated in Fig. 7, picture encoded data transmission unit 204 receives a control signal from control unit 102, reads picture encoded data at time intervals (or clock) T' different from time interval (or clock) T, which is used at the encoding, in accordance with the control signal, and sends the read image encoded data to transmission path 106.

The foregoing description has been given of the picture data receiver and picture data transmitter used in the picture data delivery system of this embodiment. Next, specific examples will be given for the picture data delivery system which is made up of these picture data receiver and picture data transmitter in combination.

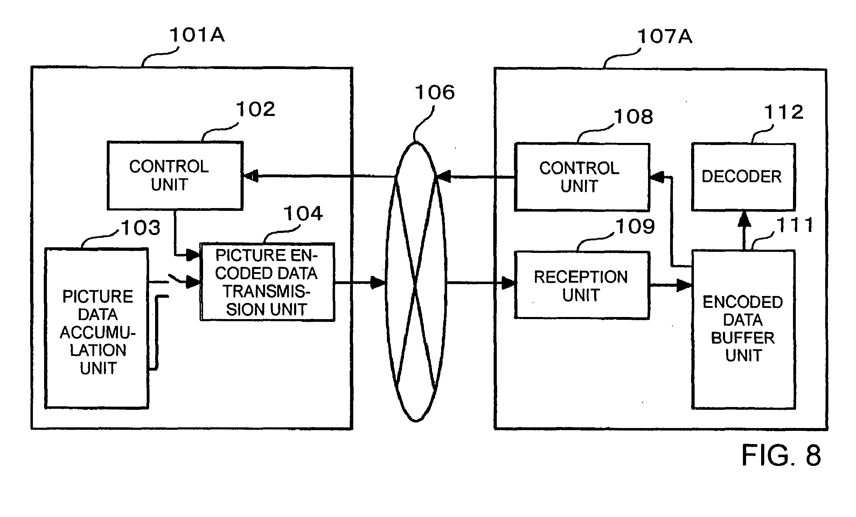

Fig. 8 illustrates a first example of the picture data delivery system. This picture data delivery system comprises picture data receiver 107A illustrated in Fig. 2 and picture data transmitter 101A in the configuration illustrated in Fig. 5.

In picture data receiver 107A in this picture data delivery system, picture encoded data reception unit 109 receives picture encoded data from transmission path 106, and accumulates it in encoded data buffer unit 111. Encoded data buffer unit 111 absorbs packet variations on transmission path 106 and late arrival of packets in picture encoded data, and then supplies the picture encoded data to decoder 112. Control unit 108 measures the amount of buffer accumulation in encoded data buffer unit 111 at predefined time intervals, and sends a control signal to transmission path 106 if the buffer is about to be exhausted, i.e., when the amount of buffer accumulation falls short of a predetermined threshold.

Picture data transmitter 101 A accumulates at least two types of picture data signals at different bit rates (for example, B1 and B2) in picture data accumulation unit 103. Assume herein that picture data is either (1) previously accumulated picture data, or (2) picture data generated by encoding in real time.

Control unit 102 in picture data transmitter 101A receives a control signal from transmission path 106, and generates a signal for switching the bit rate of picture data based on the control signal. Picture encoded signal transmission unit 104 switches the bit rate of picture encoded data accumulated in picture data accumulation unit 103 in accordance with the control signal, and reads the picture encoded data to send it to transmission path 106.

Therefore, in this system, the processing in picture data receiver 107A for receiving a picture data signal through transmission path 106 has the steps of:
control unit 108 monitoring the amount of accumulation in the buffer for storing picture data; and
control unit 108 sending a control signal to transmission path 106 when the amount of accumulation in the buffer exceeds or falls short of a predefined threshold.

Similarly, the processing in picture data transmitter 101A has the steps of:
storing at least two types of picture data at different bit rates in picture data accumulation unit 103;
receiving a control signal from transmission path 106, and retrieving the picture data from picture data accumulation unit 103 with switching the bit rate based on the control signal; and
encoding the picture data which is then transmitted to transmission path 106.

In the picture data delivery system illustrated in Fig. 8, used as picture data transmitter 101A can be one in which picture data accumulation unit 103 stores picture data as files at different bit rates (B1 and B2), and picture encoded data transmission unit 104 switches the file in accordance with a control signal for delivery to transmission path 106. When such picture data transmitter 101A is used, the processing in picture data transmitter 101A has the steps of:
storing at least two types of files, in which at least two types of picture data at different bit rates are stored, in accumulation unit 103;
receiving a control signal from transmission path 106;
switching a file based on the control signal, and retrieving the file from accumulation unit 103; and
encoding picture data in the retrieved file for transmission to transmission path 106. The processing in picture data receiver 107A is similar to the aforementioned.

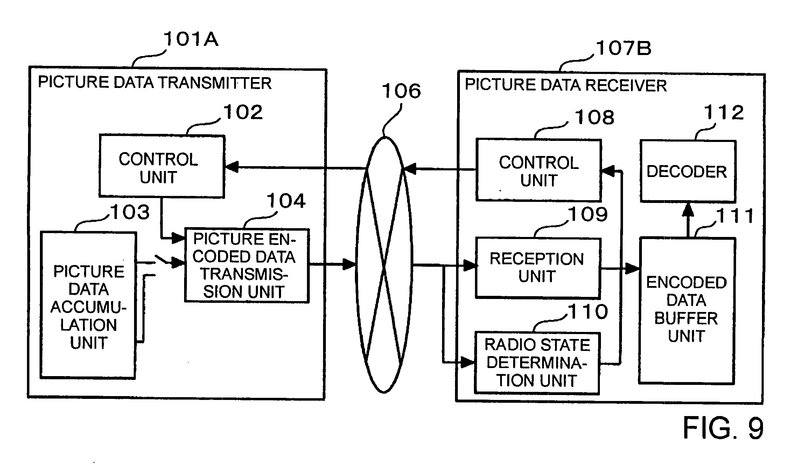

Fig. 9 illustrates a second example of the picture data delivery system. This picture data delivery system comprises picture data receiver 107B illustrated in Fig. 3, and picture data transmitter 101A in the configuration illustrated in Fig. 5. ln Fig. 9, components identical to those in Fig. 8 are designated the same reference numerals, and repeated descriptions will not be made below.

Radio state determination unit 110 of picture data receiver 107B monitors a radio reception state on transmission path 106, and, when a receiving situation changes to a predefined situation, notifies control unit 108 to that effect. Control unit 108 sends a control signal to transmission path 106.

Therefore, the processing in picture data receiver 107B for receiving a picture data signal through transmission path 106 has the steps of:
radio state determination unit 110 monitoring a receiving situation on transmission path 106; and
control unit 108 sending a control signal to transmission path 106 when the receiving situation changes to a predefined situation as a result of the monitoring in radio state determination unit 110.

The processing in picture data transmitter 101A has the steps of:
accumulating at least two types of files, in which at least two types of picture data at different bit rates are stored, in accumulation unit 103;
receiving a control signal from transmission path 106;
switching a file based on the control signal, and retrieving the file from accumulation unit 103; and
encoding picture data in the retrieved file for transmission to transmission path 106.

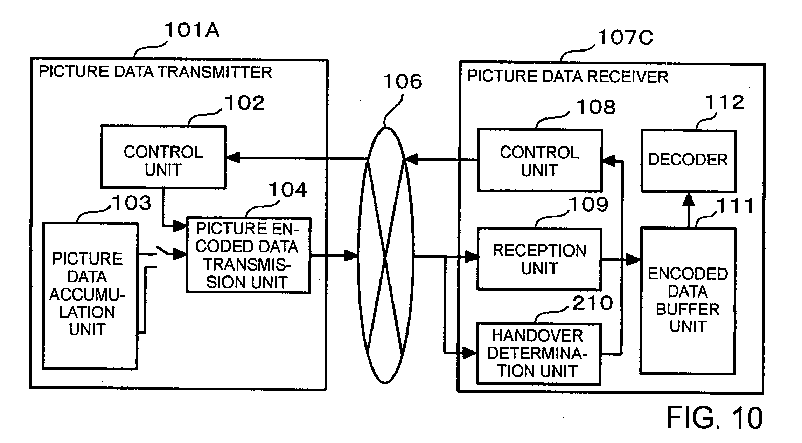

It should be noted that, in the picture data delivery system illustrated in Fig. 9, picture data receiver 107C illustrated in Fig. 4 can be used instead of picture data receiver 107B. The configuration of the system which uses picture data receiver 107C is illustrated in Fig. 10 as a third example of the system. When picture data receiver 107C is used, a control signal is sent to picture data transmitter 101A through transmission path 106 when the radio receiving situation involves a handover. Therefore, the processing in picture data receiver 107C in this system has the steps of:
handover determination unit 210 monitoring a receiving situation on transmission path 106; and
control unit 108 sending a control signal to transmission path 106 when a handover takes place as a result of the monitoring in handover determination unit 210. The processing in picture data transmitter 101A is the same as that in the system illustrated in Fig. 9.

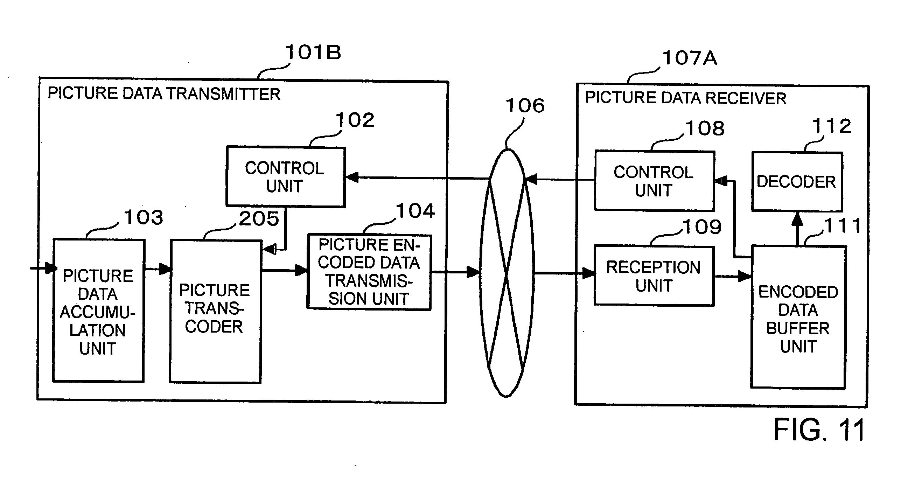

Fig. 11 illustrates a fourth example of the picture data delivery system. This picture data delivery system comprises picture data receiver 107A illustrated in Fig. 2, and picture data transmitter 101 B in the configuration illustrated in Fig. 6. In Fig. 11, components identical to those in Fig. 8 are designated the same reference numerals, and repeated descriptions will not be made below.

In the picture data transmitter 101B, picture transcoder 205 receives picture encoded data, receives a control signal from control unit 102, converts the bit rate of the received picture encoded data in accordance with the control signal, and supplies the resulting data to picture encoded data transmission unit 104. Picture encoded data transmission unit 104 sends the picture data after the bit rate conversion to transmission path 106.

As the processing in this delivery system, the processing in picture data receiver 107A for receiving a picture data signal through transmission path 106 has the steps of:
monitoring the amount of accumulation in a buffer for storing picture data; and
sending a control signal to transmission path 106 when the amount of accumulation in the buffer exceeds or falls short of a predefined threshold.

The processing in the picture data transmitter 101 B in turn has the steps of:
receiving a control signal from transmission path 106, and retrieving picture data from an accumulation unit for storing the picture data with converting the bit rate based on the control signal; and
encoding and transmitting the picture data.

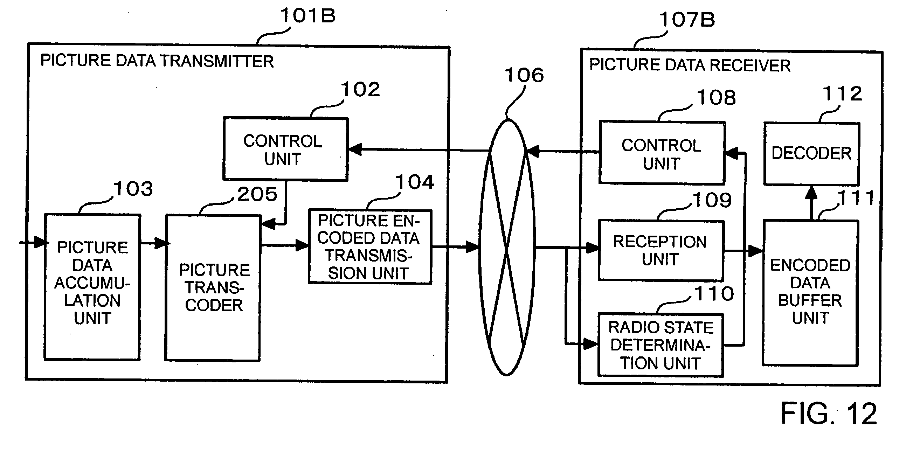

Fig. 12 illustrates a fifth example of the picture data delivery system. This picture data delivery system comprises picture data receiver 107B illustrated in Fig. 3, and picture data transmitter 101 B in the configuration illustrated in Fig. 6. In Fig. 12, components identical to those in Fig. 8 are designated the same reference numerals, and repeated descriptions will not be made below.

Radio state determination unit 110 of picture data receiver 107B monitors a radio receiving state on transmission path 106, and, when a receiving situation changes to a predefined situation, notifies control unit 108 to that effect. Control unit 108 sends a control signal to transmission path 106. picture transcoder 205 of picture data transmitter 101 B receives picture encoded data, receives a control signal from control unit 102, converts the bit rate of picture encoded data retrieved from accumulation unit 103 in accordance with the control signal, and supplies the picture encoded data to picture encoded data transmission unit 104. Picture encoded data transmission unit 104 sends the picture encoded data after the bit rate conversion to transmission path 106.

The processing executed by picture data receiver 107B in this delivery system has the steps of:
monitoring a receiving situation on transmission path 106; and
sending a control signal to transmission path 106 when the receiving situation changes to a predefined situation.

The processing executed by picture data transmitter 101 B has the step of:
receiving a control signal from transmission path 106, and retrieving the picture data from accumulation unit 103 for storing picture data with converting the bit rate of the picture data based on the control signal.

It should be noted that, in the picture data delivery system illustrated in Fig. 12, picture data receiver 107C illustrated in Fig. 4 can be used instead of picture data receiver 107B. When picture data receiver 107C is used, a control signal is sent to picture data transmitter 101 B through transmission path 106 when a radio receiving situation involves a handover.

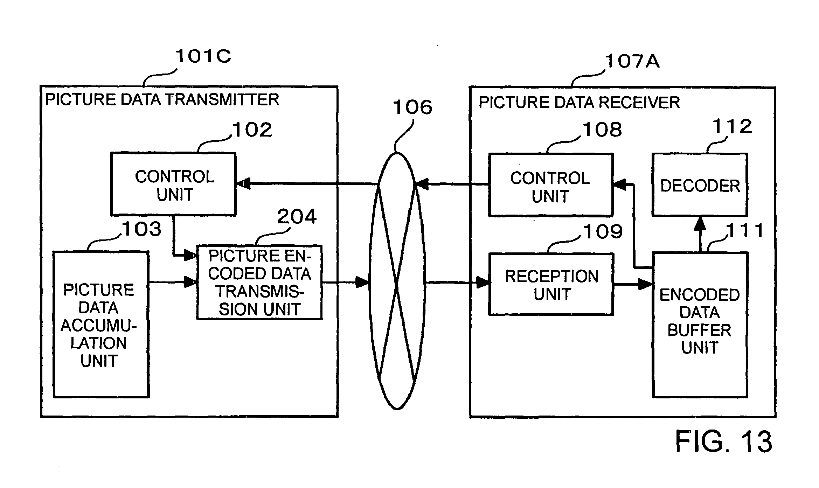

Fig. 13 illustrates a sixth example of the picture data delivery system. This picture data delivery system comprises picture data receiver 107A illustrated in Fig. 2, and picture data transmitter 101C in the configuration illustrated in Fig. 7. Components identical to those in Fig. 8 are designated the same reference numerals, and repeated descriptions will not be made below.

In picture data receiver 107A, picture encoded data reception unit 109 receives picture encoded data from transmission path 106, and accumulates it in encoded data buffer unit 111. Encoded data buffer unit 111 absorbs packet variations on transmission path 106 and late arrival of packets in picture encoded data, and then supplies the picture encoded data to decoder 112. Control unit 108 measures the amount of buffer accumulation in encoded data buffer unit 111 at predefined time intervals, and sends a control signal to transmission path 106 if the buffer is about to be exhausted.

Picture encoded data transmission unit 204 of picture data transmitter 101C receives a control signal, transmitted from picture data receiver 107A to transmission path 106, from control unit 102, reads picture encoded data from accumulation unit 103 at time intervals (or clock) T', different from time interval (or clock) T used in the encoding, in accordance with the control signal, and sends the read picture encoded data to transmission path 106.

In this delivery system, the processing executed by picture data receiver 107A has the steps of:
monitoring the amount of accumulation in a buffer for storing picture data; and
sending a control signal to transmission path 106 when the amount of accumulation in the buffer exceeds or falls short of a predefined threshold.

The processing executed by picture data transmitter 101C has the step of:
receiving the control signal from the transmission path, and reading and delivering picture data stored in accumulation unit 103 at time intervals different from time intervals at which the picture data was encoded, from accumulation unit 103.

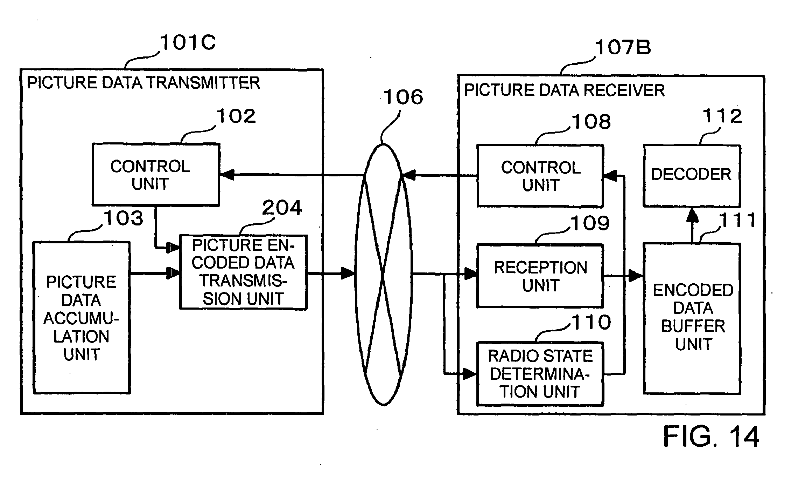

Fig. 14 illustrates a seventh example of the picture data delivery system. This picture data delivery system comprises picture data receiver 107B illustrated in Fig. 3, and picture data transmitter 101C in the configuration illustrated in Fig. 7. In Fig. 14, components identical to those in Fig. 8 are designated the same reference numerals, and repeated descriptions will not be made below.

Radio state determination unit 110 of picture data receiver 107B monitors a radio receiving state on transmission path 106, and notifies control unit 108 when a receiving situation changes to a predefined situation. Control unit 108 sends a control signal to transmission path 106. Picture encoded data transmission unit 204 of picture data transmitter 101C receives a control signal, transmitted from picture data receiver 107A to transmission path 106, from control unit 102, reads picture encoded data from accumulation unit 103 at time intervals (or clock) T', different from time interval (or clock) T used in the encoding, in accordance with the control signal, and sends the read picture encoded data to transmission path 106.

In this delivery system, the processing executed by picture data receiver 107B has the steps of:
monitoring a receiving situation on transmission path 106; and
sending a control signal to transmission path 106 when the receiving situation changes to a predefined situation.

The processing executed by picture data transmitter 101C has the step of:
receiving the control signal from the transmission path, and reading and delivering picture data stored in accumulation unit 103 at time intervals different from time intervals at which the picture data was encoded, from accumulation unit 103.

It should be noted that, in the picture data delivery system illustrated in Fig. 14, picture data receiver 107C illustrated in Fig. 4 can be used instead of picture data receiver 107B. When picture data receiver 107C is used, a control signal is sent to picture data transmitter 101 B through transmission path 106 when a radio receiving situation involves a handover.

In the picture data delivery system described above, the picture data receiver and picture data transmitter can be both implemented using a computer. Specifically, the processing and control in the aforementioned picture data receiver and picture data transmitter can be accomplished by executing a program on a computer. The computer herein referred to includes a processor and a controller. The program is read into the computer through a network or through a recording medium such as a CD-ROM which stores the program. The present invention also encompasses such a program or a program product or a recording medium. Further, a medium for transmitting such a program is also included in the scope of the present invention.

In the following, a description will be given of examples of programs according to the present invention.

A first program is a program for causing a computer which constitutes a receiver to execute the processing of:
monitoring the amount of accumulation in a buffer for storing a media signal received from a transmission path; and
sending a predetermined control signal to the transmission path based on the result of the monitoring when the amount of accumulation exceeds or falls short of a predefined threshold, such that data is received before data in the buffer is exhausted.

A second program is a program for causing a computer which constitutes a receiver to execute the processing of:
monitoring a receiving situation from a transmission path; and
sending a predetermined control signal to the transmission path when the receiving situation changes to a predefined situation.

A third program is a program for causing a computer which constitutes a receiver to execute the processing of:
monitoring a receiving situation from a transmission path; and
sending a predetermined control signal to the transmission path when the receiving situation involves a radio handover.

A fourth program is a program for causing a computer which constitutes a transmitter to execute the processing of:
storing at least two types of media signals at different bit rates in an accumulation unit;
receiving a control signal from a transmission path, and retrieving the media signal from the accumulation unit with switching the bit rate based on the control signal; and
encoding the retrieved media signal for transmission to the transmission path.

A fifth program is a program for causing a computer which constitutes a transmitter to execute the processing of:
accumulating two or more types of files which store at least two types of media signals at different bit rates in an accumulation unit;
receiving a control signal from a transmission path, switching a file based on the control signal, and retrieving the file from the accumulation unit; and
encoding a media signal in the retrieved file for transmission to the transmission path.

A sixth program is a program for causing a computer which constitutes a transmitter to execute the processing of:
receiving a control signal from a transmission path;
retrieving a media signal stored in an accumulation unit with converting the bit rate based on the control signal; and
encoding the media signal, the bit rate of which has been converted, for transmission to the transmission path.

A seventh program is a program for causing a computer which constitutes a transmitter to execute the processing of:
receiving a control signal from a transmission path; and
delivering an input signal based on the control signal at time intervals different from time intervals at which the input signal was encoded.

While the present invention has been described in conformity to the foregoing embodiments, the present invention is not limited to the configurations in the foregoing examples, but includes a variety of alterations and modifications which could be made by those skilled in the art within the principles of the present invention, as a matter of course.

## Claims

1. A receiver comprising:
a buffer for temporarily storing data received from a transmission path; and
control means for monitoring an amount of accumulation in said buffer, and sending a predetermined control signal to the transmission path based on a result of the monitoring when the amount of accumulation exceeds a predefined threshold or falls short of the threshold.

2. The receiver according to claim 1, comprising a decoder for retrieving data from said buffer and decoding the retrieved data,
wherein said control means controls such that data is received before data in said buffer is exhausted.

3. A receiver comprising:
monitoring means for monitoring a receiving situation from a transmission path; and
control means for sending a predetermined control signal to the transmission path when the receiving situation changes to a predefined situation.

4. The receiver according to claim 3, wherein said predefined situation is a radio handover.

5. A transmitter comprising:
an accumulation unit for storing at least two types of media signals at different bit rates;
switching means for receiving a control signal from a transmission path, and retrieving the media signal from said accumulating unit with switching a bit rate of the media signal based on the control signal; and
means for encoding the retrieved media signal for transmission to the transmission path.

6. A transmitter comprising:
an accumulation unit for storing at least two or more types of files in which at least two types of media signals at different bit rates are stored;
means for receiving a control signal from a transmission path, switching a file to be retrieved based on the control signal, and retrieving the file from said accumulation unit; and
means for encoding a media signal in the retrieved file, for transmission to the transmission line.

7. A transmitter comprising:
an accumulation unit for storing a media signal;
converting means for receiving a control signal from a transmission path, and retrieving the media signal from said accumulation unit with converting a bit rate based on the control signal; and
means for encoding the media signal retrieved from said converting means for transmission to the transmission path.

8. A transmitter comprising:
an accumulation unit for storing a media signal; and
means for reading and delivering the media data from said accumulation unit based on a control signal received from a transmission path, at time intervals different from time intervals at which the media signal was encoded.

9. A transmission/reception system comprising a transmitter for transmitting a media signal to a transmission path, and a receiver for receiving a media signal through the transmission path from said transmitter, wherein:
said receiver comprises:
a buffer for temporarily storing a media signal from said transmitter;
monitoring means for monitoring an amount of accumulation in said buffer; and
control means for sending a control signal to the transmission path when the amount of accumulation exceeds a predefined threshold or falls short of the threshold, and
said transmitter comprises:
accumulating means for storing at least two types of media signals at different bit rates; and
means for receiving the control signal sent from said receiver to the transmission path, and retrieving the media signal from said accumulating means with switching the bit rate based on the control signal.

10. A transmission/reception system comprising a transmitter for transmitting a media signal to a transmission path, and a receiver for receiving a media signal from said transmitter through the transmission path, wherein:
said receiver comprises:
a buffer for temporarily storing a media signal from said transmitter;
monitoring means for monitoring an amount of accumulation in said buffer; and
control means for sending a control signal to the transmission path when the amount of accumulation exceeds a predefined threshold or falls short of the threshold, and
said transmitter comprises:
accumulating means for storing at least two or more types of files in which at least two types of media signals at different bit rates are stored;
means for receiving the control signal sent from said receiver to the transmission path, switching a file to be retrieved based on the control signal, and retrieving the file from said accumulating means; and
means for encoding a media signal in the retrieved file for transmission to the transmission path.

11. A transmission/reception system comprising a transmitter for transmitting a media signal to a transmission path, and a receiver for receiving a media signal from said transmitter through the transmission path, wherein:
said receiver comprises:
monitoring means for monitoring a receiving situation on the transmission path; and
control means for sending a control signal to the transmission path when the receiving situation changes to a predefined situation, and
said transmitter comprises:
accumulating means for storing at least two types of files in which at least two types of media signals at different bit rates are stored;
means for receiving the control signal sent from said receiver to the transmission path, switching a file to be retrieved based on the control signal, and retrieving the file from said accumulating means; and
means for encoding a media signal in the retrieved file for transmission to the transmission path.

12. A transmission/reception system comprising a transmitter for transmitting a media signal to a transmission path, and a receiver for receiving a media signal from said transmitter through the transmission path, wherein:
said receiver comprises:
monitoring means for monitoring an amount of accumulation in a buffer for storing a media signal; and
control means for sending a control signal to a transmission path when the amount of accumulation exceeds a predefined threshold or falls short of the threshold, and
said transmitter comprises:
accumulating means for storing a media signal;
converting means for receiving the control signal sent from said receiver to the transmission path, and retrieving the media signal from said accumulating means with converting a bit rate based on the control signal; and
means for encoding the retrieved media signal for transmission to the transmission path.

13. A transmission/reception system comprising a transmitter for transmitting a media signal to a transmission path, and a receiver for receiving a media signal from said transmitter through the transmission path, wherein:
said receiver comprises:
monitoring means for monitoring a receiving situation on the transmission path; and
control means for sending a control signal to the transmission path when the receiving situation changes to a predefined situation, and
said transmitter comprises:
accumulating means for storing a media signal;
converting means for receiving the control signal sent from said receiver to the transmission path, and retrieving the media signal from said accumulating means with converting a bit rate based on the control signal; and
means for encoding the retrieved media signal for transmission to the transmission path.

14. A transmission/reception system comprising a transmitter for transmitting a media signal to a transmission path, and a receiver for receiving a media signal from said transmitter through the transmission path, wherein:
said receiving means comprises:
monitoring means for monitoring an amount of accumulation in a buffer for storing a media signal; and
control means for sending a control signal to the transmission path when the amount of accumulation in the buffer exceeds a predefined threshold or falls short of the threshold, and
said transmitter comprises:
accumulating means for storing a media signal;
means for receiving the control signal sent from said receiver to the transmission path, reading and delivering the media signal stored in said accumulating means based on the control signal from said accumulating means at time intervals different from time intervals at which the media signal was encoded; and
means for encoding the delivered media signal for transmission to the transmission path.

15. A transmission/reception system comprising a transmitter for transmitting a media signal to a transmission path, and a receiver for receiving a media signal from said transmitter through the transmission path, wherein:
said receiver comprises:
monitoring means for monitoring a receiving situation on the transmission path; and
control means for sending a control signal to the transmission path when the receiving situation changes to a predefined situation, and
said transmitter comprises:
accumulating means for storing a media signal;
means for receiving the control signal sent from said receiver to the transmission path, and reading and delivering the media signal stored in said accumulating means from said accumulating means based on the control signal at time intervals different from time intervals at which the media signal was encoded; and
means for encoding the delivered media signal for transmission to the transmission path.

16. A reception method comprising the steps of:
monitoring an amount of accumulation in a buffer for storing a media signal received from a transmission path;
sending a predetermined control signal to the transmission path when the amount of accumulation in the buffer exceeds a predefined threshold or falls short of the threshold; and
carrying out a control such that data is received before data in said buffer is exhausted.

17. A reception method comprising the step of:
monitoring a receiving situation from a transmission path; and
sending a predetermined control signal to the transmission path when the receiving situation changes to a predetermined situation.

18. The reception method according to claim 17, wherein said predetermined situation is a radio handover.

19. A transmission method comprising the steps of:
storing at least two types of media signals at different bit rates in an accumulation unit;
receiving a control signal from a transmission path, and retrieving the media signal from said accumulation unit with switching the bit rate based on the control signal; and
encoding the retrieved media signal for transmission to the transmission path.

20. A transmission method comprising the steps of:
storing at least two or more types of files in which at least two types of media signals at different bit rates are stored in an accumulation unit;
receiving a control signal from a transmission path, switching a file based on the control signal, and retrieving the file from said accumulation unit; and
encoding a media signal in the retrieved file for transmission to the transmission path.

21. A transmission method comprising the steps of:
receiving a control signal from a transmission path;
changing a bit rate of a media signal stored in an accumulation unit based on the control signal and retrieving the media signal; and
encoding the retrieved media signal for transmission to the transmission line.

22. A transmission method comprising the steps of:
receiving a control signal from a transmission path; and
reading and delivering a media signal from an accumulation unit for storing the media signal based on the control signal at time interval different from time intervals at which the media signal is encoded.

23. A transmission/reception method comprising the steps of:
in a receiver for receiving a media signal through a transmission path, monitoring an amount of accumulation in a buffer for storing the media signal;
sending a control signal from said receiver to the transmission path when the amount of accumulation exceeds a predefined threshold or falls short of the threshold;
in a transmitter for transmitting the media signal to the transmission path, storing at least two types of media signals at different bit rates to accumulation unit;
upon receipt of the control signal sent from said receiver to the transmission path, and retrieving the media signal from said accumulating means with switching the bit rate based on the control signal; and
encoding the retrieved signal for transmission from said transmitter to the transmission path.

24. A transmission/reception method comprising the steps of:
in a receiver for receiving the media signal through a transmission path, monitoring an amount of accumulation in a buffer for storing the media signal; sending a control signal from said receiver to the transmission path when the amount of accumulation in said buffer exceeds a predefined threshold or falls short of the threshold;
in a transmitter for transmitting the media signal to the transmission path, storing at least two or more types files in which at least two types of media signals at different bit rates are stored in an accumulation unit;
receiving the control signal sent from said receiver to the transmission path at said transmitter;
switching a file based on the control signal, and retrieving the file from said accumulation unit; and
encoding a media signal in the retrieved file for transmission to the transmission path.

25. A transmission/reception method comprising the steps of:
in a receiver for receiving a media signal through a transmission path, monitoring a receiving situation on the transmission path;
sending a control signal from said receiver to the transmission path when the receiving situation changes to a predefined situation;
in a transmitter for transmitting a media signal to the transmission path, storing at least two types of files in which at least two types of media signals at different bit rates are stored in an accumulation unit ;
receiving the control signal sent from said receiver to the transmission path at said transmitter;
switching a file based on the control signal, and retrieving the file from said accumulation unit; and
encoding a media signal in the retrieved file for transmission from said transmitter to the transmission path.

26. A transmission/reception method comprising the steps of:
in a receiver for receiving the media signal through a transmission path, monitoring an amount of accumulation in a buffer for storing the media signal; sending a control signal from said receiver to the transmission path when the amount of accumulation in said buffer exceeds a predefined threshold or falls short of the threshold;
in a transmitter for transmitting a media signal to the transmission path, receiving the control signal sent from said receiver to the transmission path;
retrieving the media signal from an accumulation unit which stores the media signal with changing a bit rate based on the control signal; and
encoding the retrieved media signal for transmission from said transmitter to the transmission line.

27. A transmission/reception method comprising the steps of:
in a receiver for receiving a media signal through a transmission path, monitoring a receiving situation on the transmission path;
sending a control signal from said receiver to the transmission path when the receiving situation changes to a predefined situation;
in a transmitter for transmitting a media signal to the transmission path, receiving the control signal sent from said receiver to the transmission path;
retrieving the media signal from an accumulation unit which stores the media signal with changing a bit rate based on the control signal; and
encoding the retrieved media signal for transmission from said transmitter to the transmission line.

28. A transmission/reception method comprising the steps of:
in a receiver for receiving a media signal through a transmission path, monitoring an amount of accumulation in a buffer for storing the media signal;
sending a control signal from said receiver to the transmission path when the amount of accumulation in said buffer exceeds a predefined threshold or falls short of the threshold;
in a transmitter for transmitting a media signal to the transmission path, receiving the control signal sent from said receiver to the transmission path;
reading and delivering a media signal stored in an accumulation unit of said transmitter based on the control signal at time intervals different from time intervals at which the media signal is encoded; and
encoding the delivered media signal for transmission from said transmitter to the transmission path.

29. A transmission/reception method comprising the steps of:
in a receiver for receiving a media signal through a transmission path, monitoring a receiving situation on the transmission path;
sending a control signal from said receiver to the transmission path when the receiving situation changes to a predefined situation;
in a transmitter for transmitting a media signal to the transmission path, receiving the control signal sent from said receiver to the transmission path;
reading and delivering a media signal stored in an accumulation unit of said transmitter based on the control signal at time intervals, different from time intervals at which the media signal is encoded, from said accumulation unit; and
encoding the delivered media signal for transmission from said transmitter to the transmission path.
